# EUROPÄISCHE PATENTSCHRIFT

(11) **EP 2 593 691 B1**
(45) Veröffentlichungstag und Bekanntmachung des Hinweises auf die Patenterteilung: **18.06.2014**
(21) Anmeldenummer: 11732420.2
(22) Anmeldetag: 07.07.2011
(51) Int. Cl.: F16D 1/092, F16D 1/08

(54) **WELLE FÜR EINE STRÖMUNGSMASCHINE**
SHAFT FOR A TURBO-MACHINE
ARBRE POUR TURBOMACHINE

(30) Priorität: 14.07.2010 EP 10007239
(43) Veröffentlichungstag der Anmeldung: 22.05.2013
(73) Patentinhaber: Siemens Aktiengesellschaft, 80333 München (DE)
(72) Erfinder: BISON, Patrick, 45470 Mülheim a.d. Ruhr (DE); DEISTER, Frank, 47877 Willich (DE); DETTMAR, Diethelm, 46485 Wesel (DE); HEINRICHS, Elmar, 41844 Wegberg (DE); PAUL, Traugott, 46282 Dorsten (DE); STROBACH, Daniel, 47608 Geldern (DE); THAMM, Norbert, 45133 Essen (DE)
(86) Internationale Anmeldenummer: PCT/EP2011/061488
(87) Internationale Veröffentlichungsnummer: WO 2012/007340

(56) Entgegenhaltungen:
- AT-B- 203 294
- GB-A- 599 251
- US-A- 4 639 194

## Beschreibung

Die Erfindung betrifft eine Anordnung umfassend eine Welle mit einem rotationssymmetrischen Wellenabschnitt und einem Rotationskörper, der zum Aufschrumpfen auf den rotationssymmetrischen Wellenabschnitt ausgebildet ist, wobei zwischen dem Rotationskörper und dem rotationssymmetrischen Wellenabschnitt im Querschnitt entlang der Rotationsachse gesehen eine Kontaktgerade gebildet ist, wobei die erste Kontaktgerade gegenüber der Rotationsachse geneigt ist. Des Weiteren betrifft die Erfindung ein Verfahren zum Aufbringen eines Rotationskörpers auf eine Welle, wobei der Rotationskörper erhitzt und auf die Welle aufgeschrumpft wird.

Eine solche Anordnung ist aus US-A-4 639 194 bekannt.

In Strömungsmaschinen, wie z. B. in Dampfturbinen, rotiert eine mit Laufschaufeln ausgebildete Welle um eine Rotationsachse innerhalb eines mit Leitschaufeln ausgebildeten Innengehäuses. Die Dampfparameter wie Druck und Temperatur des Dampfes, der in die Dampfturbine strömt, kann unterschiedliche Werte annehmen. In der Regel weist der Frischdampf, das ist der Dampf, der direkt vom Dampferzeuger kommt, die höchste Temperatur und den höchsten Druck. Nach Durchströmen der Dampfturbine weist der Dampf einen niedrigeren Druck und eine niedrigere Temperatur auf. Die Dampfturbinen werden in sogenannte Teil-Turbinen aufgeteilt, die jede für sich ein Außengehäuse sowie eine im Außengehäuse drehgelagerte Welle aufweist. Je nach Dampfparameter werden diese Teilturbinen in Hochdruck-, Mitteldruck- und Niederdruck-Teilturbinen eingeteilt. Die Einteilung in Hochdruck-, Mitteldruck- und Niederdruck-Teilturbinen wird in der Fachwelt nicht einheitlich nach den Dampfparametern vorgenommen.

Es ist üblich, die Wellen für die Hochdruck- und Mitteldruck-Teilturbinen massiv auszubilden und in diese Wellen Nuten anzuordnen, die geeignet sind, die Laufschaufeln aufzunehmen. Es ist bekannt, Niederdruckwellen derart auszubilden, dass Radscheiben auf diese Wellen aufgeschrumpft werden und diese Radscheiben Nuten zur Aufnahme von Niederdruck-Laufschaufeln aufweisen. Der Innendurchmesser dieser Radscheiben muss folgerichtig geringfügig geringer sein als der maximale Außendurchmesser des Wellenendes bei Raumtemperatur.

Ebenso wie die Radscheiben werden Kupplungen, die eine mechanische Kopplung zwischen der Niederdruck-Teilturbinenwelle und beispielsweise einen elektrischen Generator darstellen, aufgeschrumpft. Diese Kupplungen müssen zur optimalen Übertragung der Drehmomente am Wellenende angeordnet werden. Die Anforderungen an die heutigen Dampfturbinen fordern eine entsprechende Kupplungsgröße, um Leistungsmomente und Störfallmomente sicher übertragen zu können. Daher liegt der erforderliche Außendurchmesser der Kupplung in der Regel oberhalb des durch den Radscheiben-Schrumpfsitz definierten Maximaldurchmessers. Des Weiteren muss die Kupplung den Forderungen nach der Übertragbarkeit von axialen Erdbebenlasten genügen sowie der Übertragung von signifikanten Biegemomenten durch eine Fehlausrichtung des Turbinenstranges.

Die Kupplung für eine Niederdruck-Teilturbine umfasst eine auf das Ende der Welle aufgeschrumpfte, abgesetzte Ringscheibe. In der Regel handelt es sich hier um einen zylindrischen Pressverband mit geringem Übermaß. Um ein axiales Verschieben der Ringscheibe zu verhindern, wird in der Regel ein Anschlag in einer Richtung, die vom Wellenende wegzeigt, angeordnet. Ein Verschieben dieser Radscheibe in die andere Richtung wird in der Regel durch Kegelstifte verhindert. Diese Kegelstifte haben des Weiteren die Aufgabe, auftretende Torsionsmomente zu übertragen. Die Kegelstifte sind allerdings nicht geeignet, signifikant großen axialen Lasten standzuhalten. Daher besteht die Gefahr, dass die Kupplung axial von der Welle abgezogen wird. Dies soll durch die Erfindung verhindert werden.

Daher ist Aufgabe der Erfindung, eine Anordnung umfassend eine Welle sowie ein Verfahren anzugeben, bei dem es möglich ist, ein axiales Verschieben eines Rotationskörpers wie z. B. einer Kupplung zu verhindern.

Gelöst wird diese Aufgabe durch eine Anordnung umfassend eine Welle mit einem rotationssymmetrischen Wellenabschnitt und einem Rotationskörper, der zum Aufschrumpfen auf den rotationssymmetrischen Wellenabschnitt ausgebildet ist, wobei zwischen dem Rotationskörper und dem rotationssymmetrischen Wellenabschnitt im Querschnitt entlang der Rotationsachse gesehen eine Kontaktgerade gebildet ist, wobei die erste Kontaktgerade gegenüber der Rotationsachse geneigt ist, wobei eine zweite Kontaktgerade in axialer Richtung gesehen hinter der ersten Kontaktgeraden ausgebildet ist und unter einem Winkel β gegenüber der Rotationsachse geneigt ist, wobei die Pfeilung der ersten Kotaktgeraden gegenüber der zweiten Kontaktgeraden alterniert.

Die auf das Verfahren hin gerichtete Aufgabe wird gelöst durch ein Verfahren gemäß Anspruch 10.

Mit der Erfindung wird somit der Weg eingeschlagen, die üblicherweise planar, d. h. parallel zur Rotationsachse ausgebildete Wellenoberfläche, auf die ein Rotationskörper aufgeschrumpft wird, geneigt auszubilden. Durch eine entsprechende Vorfertigung der Welle und des Rotationskörpers mit entsprechenden geneigten Flächen entsteht somit eine Kraftkomponente, die im Falle eines axialen Verschiebens des Rotationskörpers aufgebaut wird, was zu einer Gegenkraft führt und dem axialen Verschieben entgegenwirkt. Somit wird ein Abziehen des Rotationskörpers von der Welle wirksam verhindert. Die Neigung der ersten Kontaktgeraden ist hierbei derart, dass vom Wellenende weg entlang gesehen der Radius des Wellenendes geringer wird. Das bedeutet im Umkehrschluss, dass der Radius zum Wellenende hin größer wird. Der Rotationskörper weist eine entsprechende Neigung auf, die derart ist, dass zum Wellenende hin der Radius, in Bezug auf den Rotationskörper, größer wird.

Die Kontaktgerade ist hierbei eine konstruierte bzw. gedachte Gerade, die sichtbar wird, wenn ein Querschnitt der Anordnung entlang der Rotationsachse gebildet wird. Die Kontaktgerade bildet sich hierbei zwischen dem Innenradius des Rotationskörpers und der Welle aus.

Erfindungsgemäß ist eine zweite Kontaktgerade in axialer Richtung gesehen hinter der ersten Kontaktgeraden ausgebildet und unter einem Winkel β gegenüber der Rotationsachse geneigt, wobei die Pfeilung der ersten Kontaktgeraden gegenüber der zweiten Kontaktgeraden alterniert. Unter einer Pfeilung ist im Wesentlichen ein Drehen in oder entgegen des Uhrzeigersinns zu verstehen. Das bedeutet, dass die erste Kontaktgerade im Uhrzeigersinn gedreht ist und die zweite Kontaktgerade entgegen dem Uhrzeigersinn gedreht ist.

Ein axiales Verschieben des Rotationskörpers sowohl in die eine als auch in die andere Richtung wird dadurch verhindert, dass die Flächen zwischen der Welle und dem Rotationskörper alternierend geneigt sind. Darunter ist zu verstehen, dass zunächst vom Wellenende weg der Radius des Wellenendes geringer wird. Entsprechend wird der Innenradius des Rotationskörpers ebenso geringer. Ab einem Innenradiusminimum, der im Wesentlichen in der Mitte des Rotationskörpers liegen könnte, steigt der Innenradius vom Wellenende weg wieder an. Im Querschnitt gesehen ähnelt die Anordnung der ersten Kontaktgeraden und der zweiten Kontaktgeraden einem sehr flachen V.

Vorteilhafte Weiterbildungen sind in den Unteransprüchen angegeben.

So wird in einer ersten vorteilhaften Weiterbildung der Rotationskörper als Kupplung ausgebildet und an einem Wellenende der Welle angeordnet. Unter Kupplung ist im weiten Sinne eine Ringscheibe zu verstehen, die an eine weitere Kupplung angeordnet werden kann, um Drehmomente geeignet zu übertragen. Im einfachsten Falle kann diese Kupplung eine Ringscheibe mit Bohrungen sein, durch die Stifte angeordnet werden und letztendlich ein Drehmoment über die stifte übertragen wird.

In einer vorteilhaften Weiterbildung grenzt der Rotationskörper an einem als Anschlag ausgebildeten Vorsprung auf der Welle an, wobei der Anschlag zur axialen Sicherung des Rotationskörpers ausgebildet ist. Einerseits wird der Rotationskörper gegen ein Verschieben zum Wellenende hin durch die geneigte Kontaktgerade verhindert und andererseits wird ein Verschieben des Rotationskörpers in die andere Richtung durch einen Anschlag, der als Vorsprung auf der Welle ausgebildet wird, wirksam verhindert. Solch ein Vorsprung ist in der Regel vergleichsweise einfach zu fertigen.

In einer weiteren vorteilhaften Weiterbildung ist zwischen der ersten Kontaktgeraden und der Rotationsachse ein Winkel α gebildet, der Werte zwischen 0° bis 20°, 5° bis 20°, 10° bis 20°, 15° bis 20°, 1° bis 15°, 1° bis 10°, 1° bis 5°, 5° bis 15° oder 0° bis 1° annimmt. Diese Werte haben sich als besonders vorteilhaft erwiesen, um ein wirksames Verschieben der Kupplung zu verhindern.

In einer vorteilhaften Weiterbildung weist der Winkel β Werte zwischen 0° bis 20°, 5° bis 20°, 10° bis 20°, 15° bis 20°, 0° bis 15°, 0° bis 10°, 0° bis 5°, 5° bis 15° oder 0° bis 1° auf.

Vorteilhafterweise weist der Winkel α denselben Wert auf wie der Winkel β.

Ebenso vorteilhaft ist es, wenn die erste Kontaktgerade direkt an der zweiten Kontaktgeraden anschließt. Dies lässt sich besonders einfach herstellen.

In dem erfindungsgemäßen Verfahren zum Aufbringen eines Rotationskörpers auf eine Welle wird erfindungsgemäß der Rotationskörper erhitzt und auf die Welle aufgeschrumpft, wobei eine erste Berührungsfläche zwischen dem Rotationskörper und der Welle gegenüber der Rotationsachse geneigt ausgebildet wird. Die Berührungsfläche kann hierbei eine lineare Erstreckung aufweisen, d. h., dass im Querschnitt gesehen eine vontaktgerade ausgebildet ist.

Erfindungsgemäß wird eine zweite Berührungsfläche zwischen dem Rotationskörper und der Welle in axialer Richtung dahinter ausgebildet, wobei die zweite Berührungsfläche gegenüber der ersten Berührungsfläche alternierend gepfeilt und gegenüber der Rotationsachse geneigt ausgebildet wird. Ähnlich wie bei der Anordnung wird somit der Radius vom Wellenende weg gesehen zunächst geringer und anschließend im Bereich der zweiten Berührungsfläche wieder größer. Dadurch wird ein Verschieben des Rotationskörpers sowohl in die eine als auch in die andere Richtung wirksam verhindert.

Die Erfindung wird anhand eines Ausführungsbeispiels näher erläutert. Dabei haben Komponenten mit denselben Bezugszeichen im Wesentlichen dieselbe Funktionsweise.

Es zeigen:
- Figur 1: eine Querschnittsansicht einer nicht zur Erfindung gehörenden Anordnung mit einem Anschlag;
- Figur 2: eine Ausführungsform der erfindungsgemäßen Anordnung im Querschnitt gesehen ohne Anschlag.

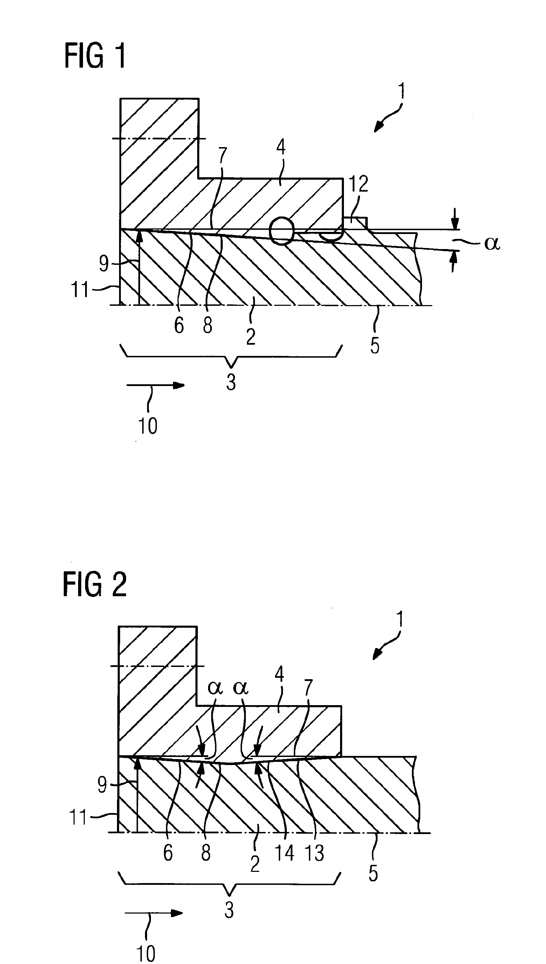

Die Figur 1 zeigt eine nicht zur Erfindung gehörende Anordnung umfassend eine Welle 2 mit einem ersten rotationssymmetrischen Wellenabschnitt 3 und einem Rotationskörper 4. Die Welle 2 sowie der Rotationskörper 4 sind im Wesentlichen rotationssymmetrisch zu einer Rotationsachse 5 ausgebildet. Der Rotationskörper 4 ist zum Aufschrumpfen auf den rotationssymmetrischen Wellenabschnitt 3 ausgebildet, wobei zwischen dem Rotationskörper 4 und dem rotationssymmetrischen Wellenabschnitt 3 im Querschnitt entlang der Rotationsachse 5 gesehen eine Kontaktgerade 6 ausgebildet ist, die gegenüber der Rotationsachse 5 geneigt ist. In der Figur 1 ist eine Hilfslinie 7 eingezeichnet, die parallel zu der Rotationsachse 5 verschonen ist. Zwischen dieser Hilfslinie 7 und der ersten Kontaktgeraden 6 ist ein Winkel α gebildet. Das bedeutet, dass zwischen einer ersten Berührungsfläche 8, die zwischen der Welle 2 und dem Rotationskörper 4 gebildet ist, eine Neigung ausgebildet ist. Diese Neigung ist derart, dass ein Radius 9 in axialer Richtung 10, geringer wird. Der Winkel α kann hierbei Werte zwischen 0° bis 20°, 5° bis 20°, 10° bis 20°, 15° bis 20°, 0° bis 15°, 0° bis 10°, 0° bis 5°, 5° bis 15° oder 0° bis 1° annehmen.

Der Rotationskörper 4 ist hierbei als eine Kupplung ausgebildet und daher am Wellenende 11 angeordnet. Über nicht näher dargestellte Bohrungen können nicht näher dargestellte Stifte angeordnet werden und mit einem anderen Wellenabschnitt drehmomentübertragend gekoppelt werden.

Ein axiales Verschieben entgegen der axialen Richtung 10 ist durch die geneigte erste Kontaktgerade 6 verhindert, da eine Kraft entgegen der axialen Richtung 10 in der axialen Richtung 10 entgegenwirkt. Damit der Rotationskörper 4 nicht in der axialen Richtung 10 verschoben werden kann, wird ein vorsprung 12 als Anschlag ausgebildet, an dem der Rotationskörper 4 anliegt. Der Rotationskörper 4 wird während eines Aufschrumpfvorgangs erhitzt und auf die Welle 2 aufgeschrumpft, wobei die erste Berührungsfläche 8 zwischen dem Rotationskörper 4 und der Welle 2 gegenüber der Rotationsachse 5 geneigt ausgebildet wird. Der Anschlag, der als Vorsprung 12 ausgebildet ist, verhindert hierbei ein Verrutschen des Rotationskörpers 4 in axialer Richtung 10.

Die Figur 2 zeigt eine erfindungsgemäße Ausführungsform der Anordnung 1 umfassend eine Welle 2 mit einem rotationssymmetrischen Wellenabschnitt 3 und einem Rotationskörper 4. Der Unterschied zu der Ausführungsform gemäß Figur 1 besteht im Wesentlichen darin, dass die Welle 2 nunmehr keinen Vorsprung 12 aufweist, der ein axiales Verschieben in axialer Richtung 10 verhindert. Vielmehr wird der Vorsprung 12 durch eine zweite Kontaktgerade 13 ersetzt. Diese zweite Kontaktgerade 13 entsteht dadurch, dass im Querschnitt gesehen die Berührungspunkte zwischen dem Rotationskörper 4 und der Welle 2 geneigt ausgebildet ist. Die zweite Kontaktgerade 13 ist hierbei in axialer Richtung 10 hinter der ersten Kontaktgeraden 6 angeordnet. Der Winkel zwischen der zweiten Kontaktgeraden 13 und der Rotationsachse 5 wird mit β bezeichnet und weist Werte zwischen 0° bis 20°, 5° bis 20°, 10° bis 20°, 15° bis 20°, 0° bis 15°, 0° bis 10°, 0° bis 5°, 5° bis 15° oder 0° bis 1° auf. In einer besonderen Ausführungsform ist der Winkel α mit dem Winkel β im Wesentlichen identisch. Ebenso ist die erste Kontaktgerade 6 in einer besonderen Ausführungsform direkt an der zweiten Kontaktgeraden 13 angeordnet.

Die somit gewonnenen Ausführungsformen lassen sich einfach fertigen und verhindern ein Verschieben des Rotationskörpers sowohl in axialer Richtung als auch entgegen der axialen Richtung 10.

## Patentansprüche

1. Anordnung (1) umfassend eine Welle (2) mit einem rotationssymmetrischen Wellenabschnitt (3) und einen Rotationskörper (4), der zum Aufschrumpfen auf den rotationssymmetrischen Wellenabschnitt (3) ausgebildet ist,
wobei zwischen dem Rotationskörper (4) und dem rotationssymmetrischen Wellenabschnitt (3) im Querschnitt entlang der Rotationsachse (5) gesehen eine erste Kontaktgerade (6) gebildet ist,
die erste Kontaktgerade (6) gegenüber der Rotationsachse (5) geneigt ist,
**dadurch gekennzeichnet, dass**
eine zweite Kontaktgerade (13) in axialer Richtung (10) gesehen hinter der ersten Kontaktgeraden (6) ausgebildet ist und unter einem Winkel β gegenüber der Rotationsachse (5) geneigt ist,
wobei die Pfeilung der ersten Kotaktgeraden (6) gegenüber der zweiten Kontaktgeraden (13) alterniert.

2. Anordnung (1) nach Anspruch 1,
wobei der Rotationskörper (4) als Kupplung ausgebildet und an einem Wellenende der Welle (2) angeordnet ist.

3. Anordnung (1) nach Anspruch 2,
wobei die erste Kontaktgerade (6) vom Wellenende (11) weg zur Rotationsachse (5) hin geneigt ist.

4. Anordnung (1) nach Anspruch 1, 2 oder 3,
wobei der Rotationskörper (4) an einem als Anschlag ausgebildeten Vorsprung (12) auf der Welle (2) angrenzt und der Anschlag (12) zur axialen Sicherung des Rotationskörpers (4) ausgebildet ist.

5. Anordnung (1) nach einem der vorhergehenden Ansprüche, wobei zwischen der ersten Kontaktgeraden (6) und der Rotationsachse (5) ein Winkel α gebildet ist, der Werte zwischen 0° bis 20°, 5° bis 20°, 10° bis 20°, 15° bis 20°, 0° bis 15°, 0° bis 10°, 0° bis 5°, 5° bis 15° oder 0° bis 1° annimmt.

6. Anordnung (1) nach einem der vorhergehenden Ansprüche, wobei der Winkel β Werte zwischen 0° bis 20°, 5° bis 20°, 10° bis 20°, 15° bis 20°, 0° bis 15°, 0° bis 10°, 0° bis 5°, 5° bis 15° oder 0° bis 1° annimmt.

7. Anordnung (1) nach einem der vorhergehenden Ansprüche, wobei der Winkel α mit dem Winkel β im Wesentlichen identisch ist.

8. Anordnung (1) nach einem der vorhergehenden Ansprüche, wobei die erste Kontaktgerade (6) direkt an der zweiten Kontaktgeraden (13) anschließt.

9. Anordnung (1) nach einem der vorhergehenden Ansprüche, wobei die Welle (2) zur Anordnung (1) in einer Strömungsmaschine,
insbesondere Dampfturbine ausgebildet ist.

10. Verfahren zum Aufbringen eines Rotationskörpers (4) auf eine Welle (2),
wobei der Rotationskörper (4) erhitzt und auf die Welle (2) aufgeschrumpft wird,
wobei eine erste Berührungsfläche (8) zwischen dem Rotationskörper (4) und der Welle (2) gegenüber der Rotationsachse (5) geneigt ausgebildet wird,
wobei eine zweite Berührungsfläche (14) zwischen dem Rotationskörper (4) und der Welle (2) in axialer Richtung (10) dahinter ausgebildet wird,
wobei die zweite Berührungsfläche (14) gegenüber der ersten Berührungsfläche (8) alternierend gepfeilt und gegenüber der Rotationsachse (5) geneigt ausgebildet wird.

11. Verfahren nach Anspruch 10,
wobei auf der Welle (2) ein Vorsprung (12) als Anschlag ausgebildet wird, mit dem ein Verrutschen des Rotationskörpers (4) in axialer Richtung (10) verhindert wird.

## Claims

1. Arrangement (1) comprising a shaft (2) with a rotationally symmetrical shaft section (3) and comprising a rotary body (4) which is designed for shrink-fitting onto the rotationally symmetrical shaft section (3),
wherein a first straight line of contact (6) is formed between the rotary body (4) and the rotationally symmetrical shaft section (3) as viewed in cross section along the axis of rotation (5),
the first straight line of contact (6) is inclined relative to the axis of rotation (5),
**characterized in that**
a second straight line of contact (13) is formed behind the first straight line of contact (6) as viewed in the axial direction (10) and is inclined at an angle β relative to the axis of rotation (5),
wherein the tapering of the first straight line of contact (6) alternates in relation to the second straight line of contact (13).

2. Arrangement (1) according to Claim 1,
wherein the rotary body (4) is in the form of a clutch and is arranged on an end of the shaft (2).

3. Arrangement (1) according to Claim 2,
wherein the first straight line of contact (6) is inclined, away from the shaft end (11), toward the axis of rotation (5).

4. Arrangement (1) according to Claim 1, 2 or 3,
wherein the rotary body (4) is adjacent to a projection (12), which is formed as a stop, on the shaft (2), and the stop (12) is designed for axially securing the rotary body (4).

5. Arrangement (1) according to one of the preceding claims,
wherein an angle α is formed between the first straight line of contact (6) and the axis of rotation (5), said angle assuming values of 0° to 20°, 5° to 20°, 10° to 20°, 15° to 20°, 0° to 15°, 0° to 10°, 0° to 5°, 5° to 15°, or 0° to 1°.

6. Arrangement (1) according to one of the preceding claims,
wherein the angle β assumes values of 0° to 20°, 5° to 20°, 10° to 20° 15° to 20° 0° to 15° 0° to 10° 0° to 5° 5° to 15°, or 0° to 1°.

7. Arrangement (1) according to one of the preceding claims,
wherein the angle α is substantially identical to the angle β.

8. Arrangement (1) according to one of the preceding claims,
wherein the first straight line of contact (6) directly adjoins the second straight line of contact (13).

9. Arrangement (1) according to one of the preceding claims,
wherein the shaft (2) is designed for arrangement (1) in a turbomachine,
in particular a steam turbine.

10. Method for mounting a rotary body (4) on a shaft (2),
wherein the rotary body (4) is heated and is shrink-fitted onto the shaft (2),
wherein a first contact surface (8) between the rotary body (4) and the shaft (2) is formed so as to be inclined relative to the axis of rotation (5),
wherein a second contact surface (14) between the rotary body (4) and the shaft (2) is formed behind said first contact surface in the axial direction (10),
wherein the second contact surface (14) is tapered in an alternating manner in relation to the first contact surface (8) and is formed so as to be inclined relative to the axis of rotation (5).

11. Method according to Claim 10,
wherein a projection (12) is formed as a stop on the shaft (2), which projection prevents slippage of the rotary body (4) in the axial direction (10).

## Revendications

1. Agencement (1) comprenant un arbre (2) ayant un tronçon (3) d'arbre de révolution et un corps (4) de révolution, qui est constitué pour le frettage sur le tronçon (3) d'arbre de révolution,
dans lequel, considérée dans la section transversale le long de l'axe (5) de révolution, une première droite (6) de contact est formée entre le corps (4) de révolution et le tronçon (3) d'arbre de révolution,
la première droite (6) de contact est inclinée par rapport à l'axe (5) de révolution,
**caractérisé en ce que**
une deuxième droite (13) de contact est formée, considérée dans la direction (10) axiale, derrière la première droite (6) de contact et est inclinée d'un angle ß par rapport à l'axe (5) de révolution,
dans lequel la flèche de la première droite (6) de contact par rapport à la deuxième droite (13) de contact est alternée.

2. Agencement (1) suivant la revendication 1, dans lequel le corps (4) de révolution est constitué en accouplement et est monté sur un bout de l'arbre (2).

3. Agencement (1) suivant la revendication 2, dans lequel la première droite (6) de contact est inclinée vers l'axe (5) de révolution en s'éloignant du bout (11) de l'arbre.

4. Agencement (1) suivant la revendication 1, 2 ou 3, dans lequel le corps (4) de révolution est voisin d'une saillie (12) sur l'arbre (2) formée en butée et la butée (12) est constituée pour la fixation axiale du corps (4) de révolution.

5. Agencement (1) suivant l'une des revendications précédentes, dans lequel il est formé, entre la première droite (6) de contact et l'axe (5) de révolution, un angle α qui prend des valeurs entre 0° à 20°, 5° à 20°, 10° à 20°, 15° à 20°, 0° à 15° 0° à 10°, 0° à 5° 5° à 15° ou 0° à 1°.

6. Agencement (1) suivant l'une des revendications précédentes, dans lequel l'angle β prend des valeurs entre 0° à 20°, 5° à 20°, 10° à 20°, 15° à 20°, 0° à 15°, 0° à 10°, 0° à 5°, 5° à 15° ou 0° à 1°.

7. Agencement (1) suivant l'une des revendications précédentes, dans lequel l'angle α est sensiblement identique à l'angle β.

8. Agencement (1) suivant l'une des revendications précédentes, dans lequel la première droite (6) de contact se raccorde directement à la deuxième droite (13) de contact.

9. Agencement (1) suivant l'une des revendications précédentes, dans lequel l'arbre (2) est constitué pour être mis dans une turbomachine,
notamment dans une turbine à vapeur.

10. Procédé pour mettre un corps (4) de révolution sur un arbre (2),
dans lequel on chauffe le corps (4) de révolution et on le frette sur l'arbre (2),
dans lequel on forme une première surface (8) de contact inclinée par rapport à l'axe (5) de révolution entre le corps (4) de révolution et l'arbre (2),
dans lequel on forme derrière dans la direction (10) axiale une deuxième surface (14) de contact entre le corps (4) de révolution et l'arbre (2),
dans lequel on donne une flèche en alternance à la deuxième surface (14) de contact par rapport à la première surface (8) de contact et on l'incline par rapport à l'axe (5) de révolution.

11. Procédé suivant la revendication 10, dans lequel on forme sur l'axe (2) en butée une saillie par laquelle un glissement du corps (4) de révolution dans la direction (10) axiale est empêché.
